**Europäisches Patentamt**

**European Patent Office**

**Office européen des brevets**

(11) Veröffentlichungsnummer : **0 005 865**
**B1**

(12) **EUROPÄISCHE PATENTSCHRIFT**

(45) Veröffentlichungstag der Patentschrift :
21.03.84

(21) Anmeldenummer : 79101786.6

(22) Anmeldetag : 06.06.79

(51) Int. Cl.³ : **F 16 L 37/08, F 16 L 41/02**

(54) Steckbares Verbindungssystem für Druckleitungen, insbesondere Bremssystem-Leitungen.

(30) Priorität : 07.06.78 DE 2824943
23.12.78 DE 2856069
23.12.78 DE 2856064
28.03.79 DE 2912160

(43) Veröffentlichungstag der Anmeldung :
12.12.79 Patentblatt 79/25

(45) Bekanntmachung des Hinweises auf die Patenterteilung : 21.03.84 Patentblatt 84/12

(84) Benannte Vertragsstaaten :
**AT DE FR GB IT NL SE**

(56) Entgegenhaltungen :
**CH-A- 432 952**
**DE-A- 2 717 908**
**DE-A- 2 730 611**
**FR-A- 1 080 178**
**FR-A- 1 496 244**
**FR-A- 2 227 483**
**FR-A- 2 250 951**
**FR-A- 2 284 818**
**FR-A- 2 299 588**
**FR-A- 2 368 663**
**GB-A- 926 215**
**GB-A- 1 081 702**
**GB-A- 1 109 105**
**GB-A- 1 527 018**
**US-A- 1 587 079**
**US-A- 3 389 923**
**US-A- 3 428 340**

(73) Patentinhaber : **Armaturenfabrik Hermann Voss
GmbH & Co.**

**D-5272 Wipperfürth (DE)**

(72) Erfinder : **Kramer, Dieter, Dr.-Ing.
Alte Wipperfürther Strasse. 181
D-5068 Odenthal (DE)**

(74) Vertreter : **Solf, Alexander, Dr. et al
Patentanwälte Dr. Solf & Zapf Postfach 13 02 19
D-5600 Wuppertal 1 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

Steckbares Verbindungssystem für Druckleitungen, insbesondere Bremssystem-Leitungen

Die vorliegende Erfindung betrifft ein Verbindungssystem für Druckleitungen, insbesondere Kunststoffleitungen für Bremssysteme, bestehend aus einem Gehäuseteil und einem mit diesem mittels eines Stecksystems lösbar verbindbaren Kupplungsteil, wobei das Gehäuseteil eine Durchgangsbohrung aufweist, in die einendig das als Stecker ausgebildete Kupplungsteil dichtend einsteckbar ist und der Steckerschaft des Steckers in der Durchgangsbohrung des Gehäuseteiles mittels eines längsgeschlitzten, in einer Ausnehmung eines der Verbindungsteile vormontierten Halterings arretiert ist und das Gehäuseteil aus zwei durch eine Schraubverbindung verbundenen Teilen besteht.

Ein derartiges Verbindungssystem ist aus der DE-A-27 30 611 bekannt, wobei eines der Verbindungselemente eine Rille zur Aufnahme eines Halterings und das andere Verbindungselement eine Sicherungsnut enthalten kann. Bei dem gezeigten Verbindungssystem ist der Haltering auf dem Steckerteil vormontiert. Dies bedeutet, daß beim Einstecken der Haltering zusammengedrückt wird, um dann in der Nut des Gehäuseteils einzurasten, und zwar nach Beendigung des Einsteckvorgangs. Aufgrund dieses Prinzips ist es erforderlich, die Innenkontur der Überwurfmutter speziell auszugestalten, so daß die Überwurfmutter speziell auszugestalten, so daß die Überwurfmutter ein Sonderteil sein muß. Darüber hinaus ist dieses System gegenüber dynamischen Druckbelastungen anfällig, wodurch die Dichtigkeit der Armatur beeinträchtigt wird. Die vorstehenden Nachteile gelten ebenfalls für die aus der FR-A-2 299 588 bekannten Armatur.

Aus der FR-A-2 368 663 ist eine Steckverbindung für nicht armierte Kunststoffrohre bekannt. Diese besteht aus zwei verklebten Gehäuseteilen, zwischen denen ein ungeschlitzter Haltering fest und absolut spielfrei angeordnet ist. Dieser Haltering besitzt nach innen ragende, federnde Klauen, die sich in die Rohrwandung des eingesteckten Rohres eingraben, wenn dieses auf Zug belastet wird, wodurch das Rohr in dem Gehäuse arretiert wird.

Ausgehend von dem eingangs genannten Stand der Technik liegt der Erfindung die Aufgabe zugrunde, die bekannten Nachteile zu vermeiden und ein Verbindugssystem zu schaffen, dessen Dichtigkeit unter allen Betriebsbedingungen gewährleistet ist und das unter Verwendung marktüblicher Normteile für das Gehäuse hergestellt werden kann und platzsparend ist sowie einen möglichst großen Durchflußquerschnitt besitzt.

Erfindungsgemäß wird dies dadurch erreicht, daß das den Steckerschaft aufnehmende Teil des Gehäuseteils aus einem Einschraubstück mit einem Außengewinde besteht, das in das andere, mit einem Innengewinde versehene Teil des Gehäuseteils eingeschraubt ist, und daß die Ausnehmung aus einer zwischen dem Einschraubstück und dem anderen Teil gebildeten ringförmigen Kammer besteht, deren in Einsteckrichtung vordere Begrenzungswand aus der Stirnfläche des Einschraubstücks besteht, wobei hinter diese Stirnfläche der Haltering durch Erweiterung seiner Innen- und Außenkontur nach außen spreizbar angeordnet und ein axial wirkendes Federelement zwischen dem Stecker und dem Gehäuse angeordnet ist.

Die vorstehende erfindungsgemäße Lösung bewirkt, daß durch sie keine spezielle Ausgestaltung des Einschraubstücks erforderlich ist. Die unter dem Einschraubstück entstehende ringförmige Kammer wird platzsparend als Raum für den Haltering genutzt.

Hierdurch wird zudem eine leichte und unverlierbare Vormontage und ein Schutz gegen Beschädigungen von außen sowie eine leichte Lösbarkeit erreicht. Das weitere Merkmal, die federgemäße Abstützung des Steckerteils in dem Gehäuseteil bewirkt eine Vorspannung der beiden Teile in axialer Richtung und damit eine Spielfreiheit in dieser Richtung, so daß dynamische Druckbelastungen kompensiert werden können, ohne daß die Dichtigkeit der Armatur beeinträchtigt wird. Die federgemäße Abstützung erzeugt eine druckunabhängige Vorspannung innerhalb des Verbindungssystems. Ein weiterer Vorteil der Erfindung besteht darin, daß eine geringe Drosselung vorhanden ist.

Weitere vorteilhafte Ausführungsformen des erfindungsgemäßen Verbindungssystems sind in den abhängigen Ansprüchen enthalten.

Anhand der in den beiliegenden Zeichnungen dargestellten Ausführungsbeispiele wird nun die Erfindung näher erläutert. Es zeigen :

Figuren 1 bis 6 und 12, verschiedene Ausführungsformen des erfindungsgemäßen Verbindungssystems im Schnitt,

Figuren 7, 8, 9, 10, 11, 13 Ansichten verschiedener Ausführungsformen der verwendeten Halteringe,

Figur 14 eine Ansicht eines als Winkelprofil ausgeführten erfindungsgemäßen Verbindungssystems, zum Teil geschnitten.

Das in den Fig. dargestellte Prinzip der erfindungsgemäßen Anschlußvorrichtung basiert darauf, daß die Lösbarkeit dadurch erreicht wird, daß ein Adapter praktisch zweigeteilt ist, indem in den Adapter ein Einschraubstück geschraubt ist. Durch Herausschrauben des Einschraubstücks kann dann der Anschlußstecker zusammen mit dem Haltering herausgezogen werden. Der Adapter 366 weist einen Gewindeabschnitt 352 auf, mit dem er in ein Gehäuse eingeschraubt werden kann. Weiterhin weist der Adapter eine Durchgangsbohrung 353 auf, in die ein Anschlußstecker 354 mit seinem Steckerschaft eingesteckt wird. Dem Gewindeabschnitt 352 gegenüber am anderen Ende des Adapters 351 weist dieser ein Außengewinde 357 auf.

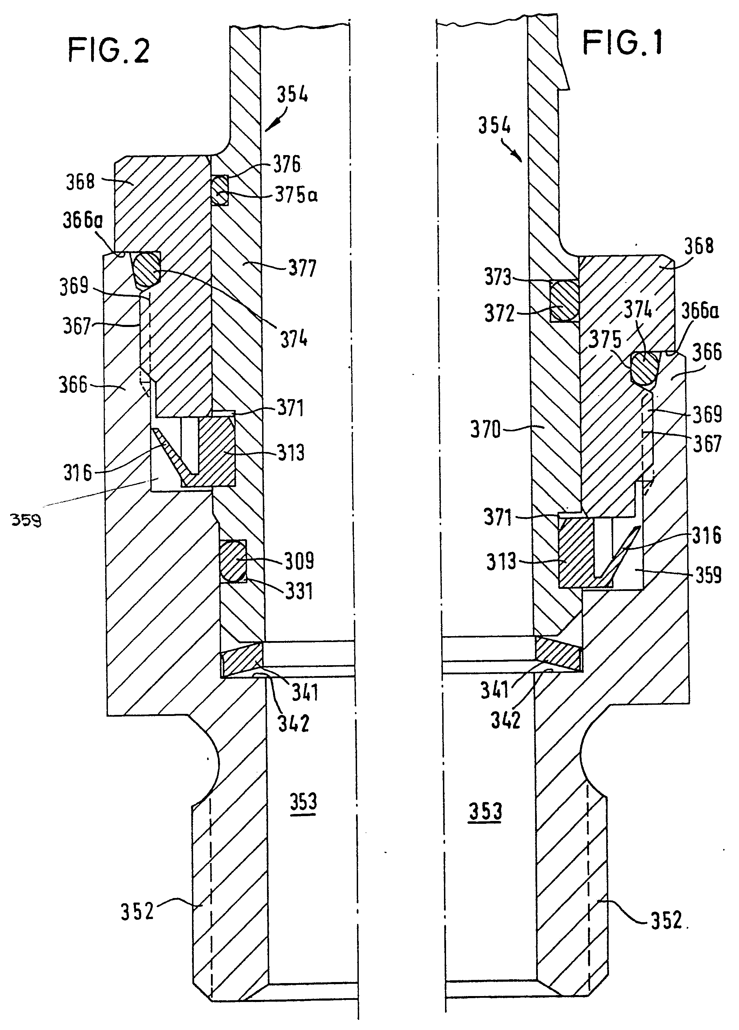

In den Fig. 1 und 2 sind zwei alternative Ausführungsformen dargestellt. In der Fig. 1 ist eine erfindungsgemäße Anschlußvorrichtung gezeigt, wobei in den Adapter 366 ein Einschraubstück 368 endseitig eingeschraubt ist. Hierzu weist der Adapter ein Innengewinde 367 und das Einschraubstück 368 ein Außengewinde 369 auf. Durch das Einschraubstück 368 wird innerhalb des Adapters eine ringförmige Kammer 359 als Aufnahmekammer geschaffen, die einen Haltering 313 aufnimmt. Dieser Haltering 313 ist geschlitzt, so daß er spreizbar ist. Sein Durchmesser ist im nicht gespreizten Zustand geringer als der Durchmesser des unteren Randabschnitts des Steckerschaftes. Der Haltering 313 weist an seinem äußeren Umfang schräg nach oben vom unteren Ringende aus abstehende Zentriernocken 316 auf. Durch diese Zentriernocken 316 wird eine stets zentrische Anordnung des Halterings zur Längsachse der erfindungsgemäßen Anschlußvorrichtung erreicht, und zwar in jeder Einsteckstellung des Steckerschaftes 370. Der Haltering rastet nach dem Einstecken eines Steckerschaftes 370 in eine Ringnut 371 des Steckerschaftes, nachdem er zunächst beim Einstecken des Steckerschaftes geweitet worden ist. Die Abdichtung des Steckerschaftes gegenüber dem Adapter bzw. gegen das Einschraubstück erfolgt mittels eines Profildichtringes 372, der oberhalb des Halteringes 313 in einer Umfangsnut 373 im Steckerschaft 370 angeordnet ist. Damit hat die Profildichtung 372 eine doppelte Funktion, und zwar einerseits Abdichtung nach außen gegen Schmutz und andererseits Abdichtung nach innen gegen den Austritt z. B. von Druckluft. Eine weitere Abdichtung nach innen erfolgt mittels eines Dichtringes 374, der am Ende des Adapters 366 und am Ende des Außengewindes des Einschraubstücks zwischen diesem und dem Adapter angeordnet ist und beim Einschrauben verpreßt wird, so daß auch in diesem Bereich eine sichere Abdichtung erfolgt. Zur Aufnahme des Dichtringes 374 weist das Einschraubstück am Gewindeende eine umlaufende Nut 375 auf. Wie sich aus Fig. 1 ergibt, ist der Steckerschaft im übrigen im gesamten Einsteckbereich bis auf im Bereich der Ringnut 371 mit gleich großem Durchmesser ausgeführt, wodurch sich eine besonders einfache Herstellung des Steckerschaftes ergibt.

Zur Erzeugung einer Vorspannung in der Anschlußvorrichtung ist innerhalb des Adapters 366 eine Tellerfeder 341 auf einem im Adapter ausgebildeten Anschlag 342 gelegt, die durch den eingesteckten Steckerschaft 370 nach unten gedrückt wird, so daß eine Federkraft in entgegengesetzter Richtung zur Einsteckrichtung ausgeübt wird, wodurch wiederum die Vorspannung innerhalb der Anschlußvorrichtung erzeugt wird.

Die Ausführungsform in Fig. 2 unterscheidet sich von der gemäß Fig. 1 nur in der Art der Abdichtung, denn bei der Ausführungsform gemäß der Fig. 2 sind zwei Umfangsdichtungen im Steckerschaft vorgesehen, und zwar eine untere Umfangsdichtung zum Abdichten nach innen mittels eines Profildichtringes 309 in einer Umfangsnut 331 des Steckerschaftes 377. Die Abdichtung nach außen erfolgt mit einer zusätzlichen Dichtung 375a, die in einer Ringnut 376 oberhalb des Halteringes 313 angeordnet ist. Auch hier kann eine zusätzliche Abdichtung nach innen im Gewindebereich zwischen Einschraubstück und Adapter erfolgen. Was die Ausführungsform des Steckerschaftes 377 betrifft, so weist dieser zwei Durchmesserbereiche auf, und zwar einen im Durchmesser verringerten Bereich im Bereich der Dichtung 309 und einen im Bereich des Halterings und der Dichtung 375a im Durchmesser demgegenüber vergrößerten Bereich. Beiden Ausführungsformen der Fig. 1 und 2 ist es gemeinsam, daß eine Vorspannung mittels einer im Adapter angeordneten Tellerfeder 341 erzeugt wird. Das Herstellen der Anschlußverbindung erfolgt dadurch, daß zunächst der Haltering und das Einschraubstück im Adapter vormontiert werden. Danach wird der Anschlußstecker in den Adapter mit eingeschraubtem Einschraubstück eingesteckt, wobei dann der Anschlußstecker in den von dem Einschraubstück und dem Adapter eingeschlossenen Haltering einrastet. Das Lösen der Steckverbindung erfolgt durch Herausdrehen des Einschraubstücks. Indem das Einschraubstück 368 bis zur Anlage an eine Anlagefläche 366a fest eingeschraubt wird, erfolgt eine Sicherung der beiden Teile gegen Lösen. Dabei ist der Einschraubweg derart bemessen, daß, wenn das Einschraubstück an der Anlagefläche 366a anliegt, noch kein Berührungskontakt zwischen dem Haltering 313 und dem Ende des Einschraubstücks gegeben ist.

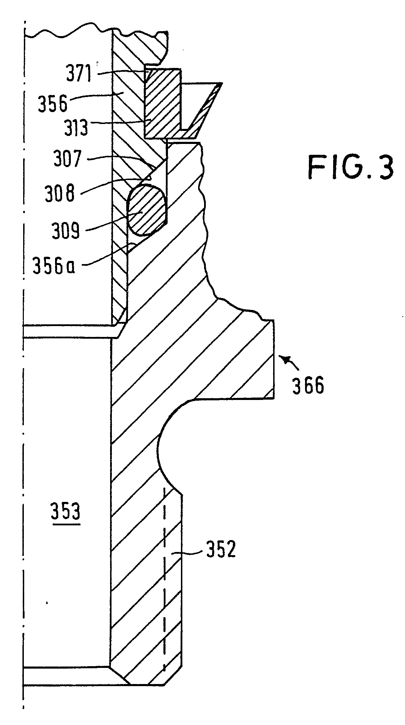

In Fig. 3 ist eine alternative Ausführungsform gezeigt, wobei gleiche Teile wie in den Fig. 1 und 2 mit denselben Bezugszeichen versehen sind. Die Abdichtung des Steckerschaftes 356 gegen den Adapter 366 erfolgt mittels des Profildichtringes 309, der gegen einen abgeschrägten Anschlag 356a in der Durchgangsbohrung anliegt. Die Abschrägung des Anschlags 356a entspricht der Abschrägung der Wandfläche 308 am Absatz 307 des Steckerschaftes. Durch diese Anordnung des Profildichtringes 309 in Verbindung mit den abgeschrägten Anlageflächen wird eine Vorspannung innerhalb der Anschlußvorrichtung erzeugt, die bewirkt, daß der Steckerschaft gegen den Haltering 313 nach oben gedrückt wird. Was die Montage dieser erfindungsgemäßen Anschlußvorrichtung betrifft, so wird zunächst der Haltering in die ringförmige Kammer zwischen Einschraubstück und Adapter und der Profildichtring in die Durchgangsbohrung eingelegt. Danach wird der Steckerschaft eingesteckt, wobei der Haltering dann in die Nut des Steckerschaftes einrastet, womit die Steckverbindung hergestellt ist. Ein Lösen der Steckverbindung erfolgt mittels Herausschrauben des Einschraubstücks.

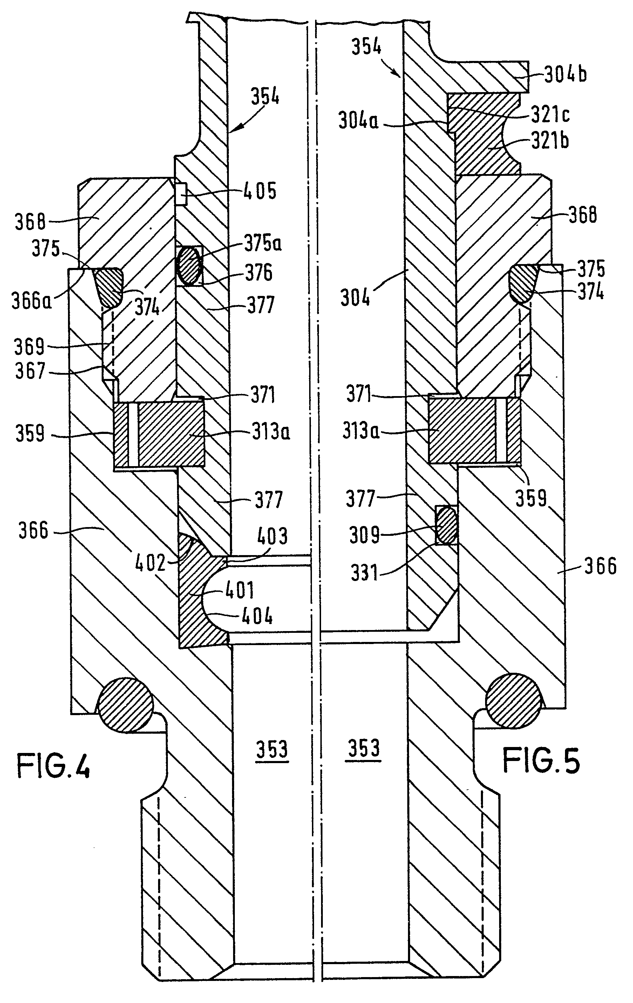

In den Fig. 4 und 5 ist jeweils eine Ausführungsform des erfindungsgemäßen Verbindungssystems dargestellt, die sich von denen der Fig. 1 und 2 durch eine andere Ausbildung des Halterings und der Dicht- und Federelemente unterscheiden. Sich entsprechende Teile der Fig. 4 und 5 einerseits und der Fig. 1 und 2 andererseits sind mit denselben Bezugsziffern versehen. Wie in Fig. 4 gezeigt, ist in der Durchgangsbohrung 353 auf einem umlaufenden Absatz derselben ein gummielastischer Gummipuffer 401 angeordnet. Dieser Gummipuffer 401 dient einerseits als Federelement zur Erzeugung einer Vorspannung im eingesteckten Zustand der Steckverbindung, wie dargestellt, und andererseits als Dichtung nach innen, so daß eine zusätzliche Umfangsdichtung, wie in Fig. 2 gezeigt, entfallen kann. Der Steckerzapfen 377 ist am Einsteckende stirnseitig stark angefast, so daß sich ein relativ tiefer, keilförmiger Ringspalt ergibt, in den sich der Gummipuffer hineindrücken kann. Dabei kann über die Anfasung des Steckerschaftes die Stärke der Abdichtung und die der Vorspannung reguliert werden. Die relativ große Anfasung ermöglicht es ebenfalls, daß der Haltering 313a selbst nicht an seiner Innenkante angefast werden muß. Der Gummipuffer 401 ist mit seinem dem Steckerschaft zugekehrten Ende stirnseitig derart ausgebildet, daß er der Kontur des Steckerzapfens etwa angepaßt ist, wobei ein konvex gewölbter Abschnitt 402 vorhanden ist, an den sich ein waagerechter Steg 403 anschließt. Durch diese Ausgestaltung in Verbindung mit der glatten äußeren Mantelfläche kommt der Gummipuffer bei seiner Verpressung durch den Steckerzapfen umfangsmäßig voll zur Anlage. Durch die umfangsgemäße Wölbung 404 nach innen kann er bei Druckbeanspruchung nach innen nachgeben. Die Abdichtung nach außen erfolgt in gleicher Weise wie in Fig. 2 beschrieben. Oberhalb der Nut 376 ist eine umlaufende Markierungsnut 405 vorgesehen. Diese Markierungsnut ist derart angeordnet, daß sie nach dem Einstecken des Steckerzapfens in dessen Arretierstellung gerade in der Durchgangsbohrung verschwunden ist, so daß damit eine Sichtkontrolle ausgeübt werden kann, ob und inwieweit der Steckerzapfen eingesteckt und arretiert ist. Anstelle einer Nut kann auch ein Absatz vorgesehen sein.

Die Ausführungsform gemäß Fig. 5 unterscheidet sich von der gemäß Fig. 4 dadurch, daß hier die Abdichtung nach außen und die Erzeugung der Vorspannung von demselben Element erreicht wird, während die Abdichtung nach innen mittels eines Dichtringes 309, wie in Fig. 2 beschrieben, erfolgt. Zur Abdichtung nach außen und zur Erzeugung der Vorspannung dient das gummielastische, zylinderförmige Element 321b. Dieses Federelement 321b besitzt an seiner Umfangsfläche eine umlaufende Einbuchtung, wodurch eine Schwächung des Querschnitts erreicht wird und die Federkennlinie eingestellt werden kann. An seiner Innenwandung besitzt das Federelement einen umlaufenden Absatz 321c, der mit einer Ausnehmung 304a in dem Steckerschaft 304 korrespondiert. Der Steckerschaft 304 weist einen Ringbund 304b auf, zwischen dem und der Stirnfläche des Einschraubstücks 368 das Element 321b angeordnet ist.

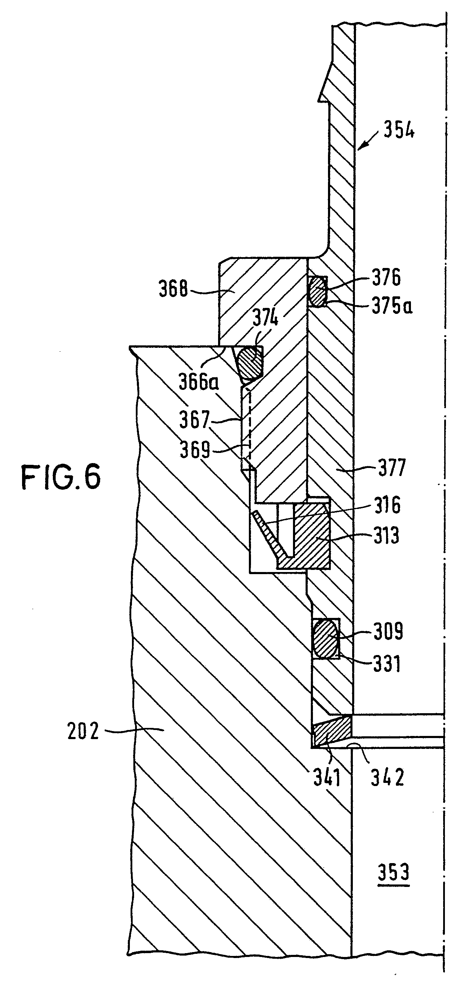

In Fig. 6 ist ein Ausführungsbeispiel des erfindungsgemäßen Stecksystems gezeigt, wobei es sich um eine lösbare Verbindung nach dem Prinzip gemäß Fig. 2 handelt. Hierbei wird das Einschraubstück 368 jedoch nicht in einen Adapter eingeschraubt, sondern unmittelbar in einen Gehäusekörper 202, z. B. in ein Ventilgehäuse, so daß die Durchgangsbohrung 353 des Adapters gemäß Fig. 2 nun unmittelbar zum Teil vom Gehäuse 202 und zum Teil von dem Einschraubstück mit ihrer gesamten Innenkontur ausgebildet wird. Was die Dichtelemente und die Elemente zur Erzeugung der Vorspannung betrifft, so entsprechen diese gemäß denen in Fig. 2.

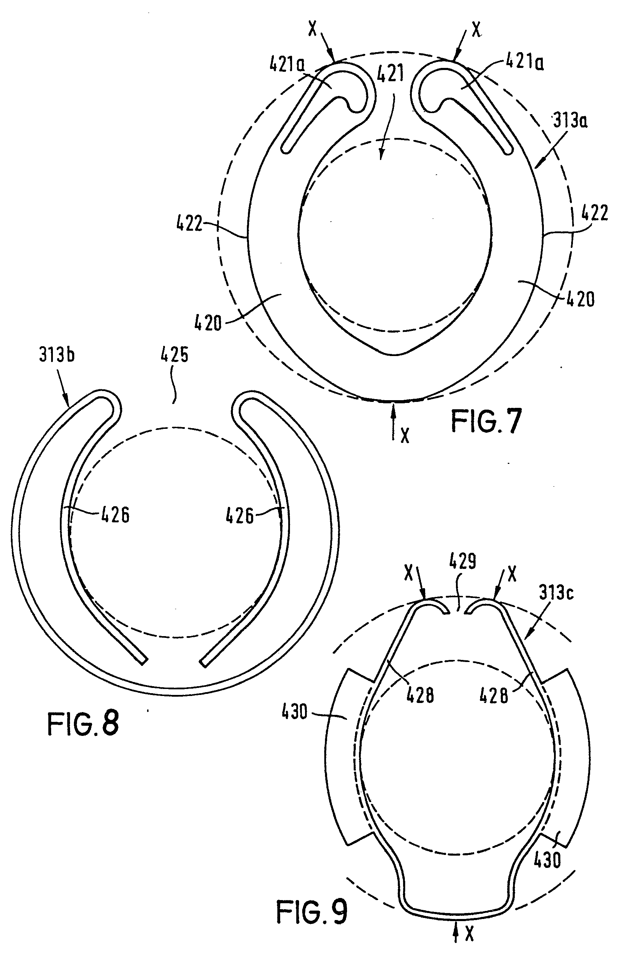

In den Fig. 4 und 5 ist ein Haltering 313a aus Kunststoff gezeigt, dessen genaue Gestalt sich aus Fig. 7 ergibt. Hierbei handelt es sich um einen selbstzentrierenden Haltering. Der Haltering 313a hat eine ovale Grundform und ist geschlitzt, so daß sich zwei einendig verbundene, gleiche bogenförmige Arme 420 ergeben. Der Haltering 313a schließt eine ovale Öffnung 421 ein, so daß sich eine etwa tangentiale Anlage des Halterings am Umfang des Steckerschaftes an zwei einander gegenüberliegenden Bereichen ergibt. Der Steckerumfang ist gestrichelt angedeutet. Die Arme 420 sind an ihrer Außenseite etwa in der Armmitte abgeflacht, so daß sich beim Einlegen in die ringförmige Kammer eine Dreipunktanlage des Ringes ergibt. Die Anlagepunkte sind durch die Pfeile X angezeigt. Die Kontur der Anlagefläche der Nut ist ebenfalls gestrichelt angedeutet. Im Bereich der freien Enden der Arme weisen diese Aussparungen bzw. Durchbrechungen 421a auf, die sich zu den Enden hin erweitern und im Bereich der Anlagepunkte am größten sind. Diese Aussparungen ermöglichen ein Zusammenpressen und somit ein Nachgeben der Arme beim Einstecken des Steckers. Des weiteren wird durch die Abflachungen 422 der Arme 420 ein Nachgeben des Halterings in diesem Bereich ermöglicht.

In den Fig. 8 bis 11 sind weitere Möglichkeiten der Ausgestaltung von Halteringen gezeigt, die anstelle des Halterings 313 und 313a im erfindungsgemäßen Stecksystem verwendet werden können.

Der Haltering 313b gemäß Fig. 8 ist aus metallischem Federband, z. B. mit einer Breite von 3 mm und einer Dicke von 0,5 mm gefertigt. Dieser Haltering 313b ist kreisförmig gebogen und weist einen Schlitz 425 auf. Aufgrund der Kreisform liegt er umfangsgemäß in der Kammer der Durchgangsbohrung an. An den beiden Schlitzenden weist der Haltering nach innen in zueinander entgegensetzten Richtungen umgebogene bogenförmige Arme 426 auf, die eine ovale Fläche einschließen, so daß sie den eingesteckten Stecker, dessen Umfangskontur gestrichelt angedeutet ist, etwa tangential an einander gegenüberliegenden Bereichen umschließen. Die Arme 426 sind federelastisch, so daß sie beim Einstecken des Steckerschaftes zurückfedern können.

Der Haltering 313c gemäß Fig. 9 ist ebenfalls aus metallischem Federband hergestellt. Er besteht aus zwei zur Längsachse zueinander klappsymmetrischen, einendig verbundenen Armen 428. Die Arme 428 schließen ebenfalls eine ovale Fläche ein, so daß sie mit ihrem stärker gebogenen Mittelbereich den gestrichelt angedeuteten Steckerschaft etwa tangential umfassen. Die freien Enden der Federarme 428 sind nach innen umgebogen und sind durch einen Schlitz 429 voneinander getrennt. Der Umbiegebereich der freien Enden dient als Anlage an der Wandung der ringförmigen Kammer der Durchgangsbohrung. Die Anlagepunkte sind durch die Pfeile X gekennzeichnet. Ein weiterer Anlagebereich, der ebenfalls durch einen Pfeil X angegeben ist, liegt dem Schlitz 429 gegenüber. Dadurch besitzt der Haltering 313c eine Dreipunktanlage in der ringförmigen Kammer. Im Mittelbereich der Arme sind jeweils oben und unten rechtwinklig nach außen Auflageflächen 430 der Federarme 428 abgebogen. Die Auflageflächen 430 dienen zur Abstützung des Federrings in der Kammer und als Anlagefläche gegenüber dem Stecker.

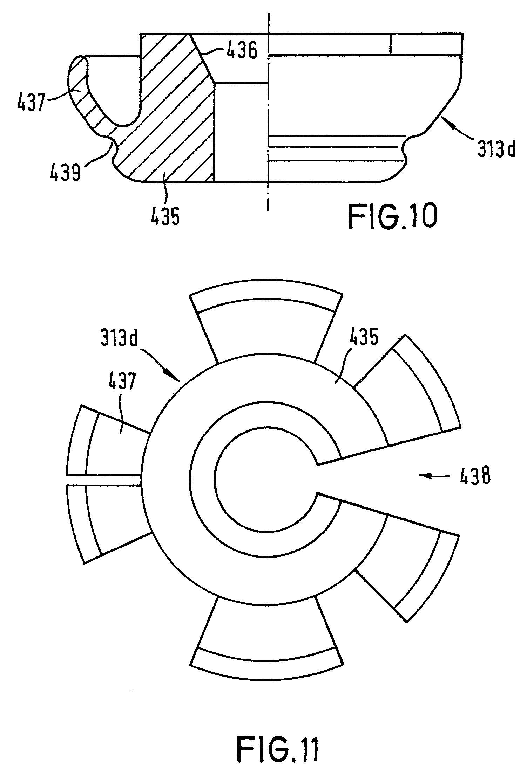

In den Fig. 10 und 11 ist eine weitere Alternative eines Halterings für ein erfindungsgemäßes Verbindungssystem gezeigt. Dieser Haltering 313d ist aus Kunststoff gefertigt und besteht aus einem geschlitzten zylindrischen Ringkörper 435 mit einer Anfasung 436 an der oberen einsteckseitigen Innenkante. Am unteren Ende des Ringkörpers erstrecken sich nach oben gebogene Nocken 437. Dabei sind im dargestellten Beispiel füng Nocken vorhanden. Diese Nocken 437 dienen zur Zentrierung des Halterings und gewährleisten aufgrund ihrer Nachgiebigkeit ein federelastisches Verhalten des Halterings beim Einstecken des Steckerzapfens. Der Nocken 437, der dem Schlitz 438 gegenüberliegt, ist geschlitzt, wodurch ein Ausweichen des Halterings zusätzlich ermöglicht wird. Die Rastnocken 437 weisen außen im Übergangsbereich zum Ringkörper eine Einbuchtung 439 auf, wodurch eine Schwächung und damit eine definierte Biegestelle erreicht wird. Die Nocken verlaufen an ihren freien Enden etwa senkrecht nach oben, wodurch sich eine sichere Anlage und Führung ergibt.

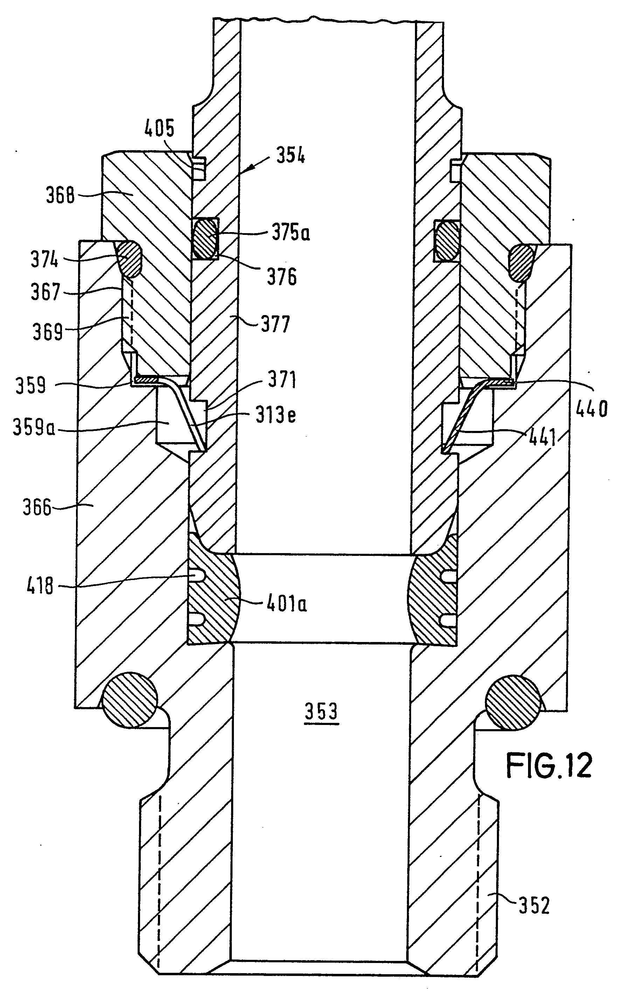

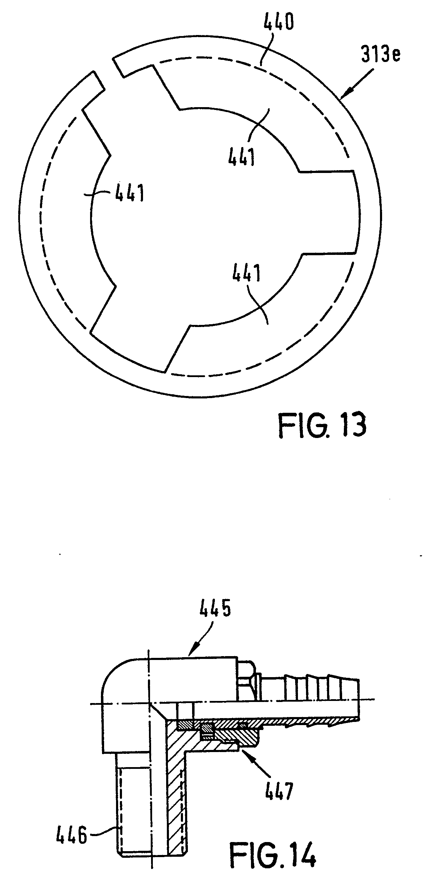

In Fig. 12 und 13 ist ein Haltering 313e dargestellt, der als Metallring aus Federband gefertigt ist. Dieser Haltering besitzt einen etwa waagerecht verlaufenden Ringkörper 440. Von diesem geschlitzten Ringkörper sind in Einsteckrichtung von seiner inneren Kante aus im spitzen Winkel zur Steckachse stehende federnde Lappen 441 abgebogen. Diese Lappen 441 dienen zur Arretierung des Steckerzapfens. Dabei ist die Höhe der Haltekraft der Lappen abhängig von der Steilheit ihres Verlaufs. In Fig. 12 ist der Haltering 313e im eingesetzten Zustand in einer erfindungsgemäßen Verbindung gezeigt. Dabei entspricht der Aufbau des Verbindungssystems demjenigen der Fig. 4, so daß die entsprechenden Teile mit denselben Bezugsziffern versehen sind. Unterschiedlich zur Fig. 4 sind der Haltering, die Kammer und der Gummipuffer. Der gezeigte Gummipuffer 401a weist an seiner äußeren Umfangsfläche Umfangsnuten 418 auf, die zur Erhaltung der Elastizität, des Kanaldurchmessers und der Dichtheit dienen. Im übrigen entspricht dieser Gummipuffer funktionsmäßig im wesentlichen dem in Fig. 4. Zur Aufnahme des Halterings 313e dient eine Nut 359a, in die die Lappen 441 hineinragen. Der Ringkörper 440 des Halterings liegt dabei auf dem durch die Nut 359a gebildeten Absatz auf.

In Fig. 14 ist ein Adapter als Formteil 445 ausgebildet, das auf der einen Seite ein Einschraubgewinde 446 besitzt und auf der anderen Seite einen Steckanschluß 447. Im dargestellten Beispiel ist ein L-Formteil dargestellt. Es können jedoch auch T-Formteile mit zwei Steckanschlüssen oder Doppel-T-Formteile mit drei Steckanschlüssen im Rahmen des erfindungsgemäßen Verbindungssystems eingesetzt werden.

**Ansprüche**

1. Verbindungssystem für Druckleitungen, insbesondere Kunststoffleitungen für Bremssysteme, bestehend aus einem Gehäuseteil (366, 368, 202) und einem mit diesem mittels eines Stecksystems lösbar verbindbaren Kupplungsteil (354), wobei das Gehäuseteil eine Durchgangsbohrung (353) aufweist, in die einendig das als Stecker ausgebildete Kupplungsteil dichtend einsteckbar ist und der Steckerschaft (370, 377, 356, 304) des Steckers in der Durchgangsbohrung des Gehäuseteiles mittels eines längsgeschlitzten, in einer Ausnehmung eines der Verbindungsteile vormontierten Halterings (313, 313a, b, c, d, e) arretiert ist und das Gehäuseteil aus zwei durch eine Schraubverbindung verbundenen Teilen besteht, dadurch gekennzeichnet, daß das den Steckerschaft (370, 377, 356, 304) aufnehmende Teil des Gehäuseteils aus einem Einschraubstück (368) mit einem Außengewinde (369) besteht, das in das andere, mit einem Innengewinde (367) versehene Teil (366, 202) des Gehäuseteils eingeschraubt ist, und daß die Ausnehmung aus einer zwischen dem Einschraubstück und dem anderen Teil gebildeten ringförmigen Kammer (359) besteht, deren in Einsteckrichtung vordere Begrenzungswand aus der Stirnfläche des Einschraubstücks (368) besteht, wobei hinter dieser Stirnfläche der Haltering (313a, b, c, d, e) durch Erweiterung seiner Innen- und Außenkontur nach außen spreizbar angeordnet und ein axial wirkendes Federelement (309, 341, 321b, 401, 401a) zwischen dem Stecker (354) und dem Gehäuse (366, 202) angeordnet ist.

2. Verbindungssystem nach Anspruch 1, dadurch gekennzeichnet, daß der Haltering (313e) schräg nach unten und innen zur Einsteckachse hin gerichtete Federlappen (441) aufweist, die eine Nut (359a) durchgreifen und in eine Ringnut (371) des Steckerzapfens (377) einrasten.

3. Verbindungssystem nach Anspruch 1 oder 2, dadurch gekennzeichnet, daß innerhalb der Durchgangsbohrung (353) ein als Tellerfeder (341) oder Gummifeder (309, 401, 401a) ausgebildetes Federelement zwischen einer Anlagefläche (356a, 342) der Durchgansbohrung und dem Einsteckende des Steckerschaftes (356, 370, 377) angeordnet ist.

4. Verbindungssystem nach Anspruch 1 oder 2, dadurch gekennzeichnet, daß außerhalb der Durchgangsbohrung (353) um den Steckerschaft (304) herum eine Gummifeder (321b) zwischen dem Gehäuse (368) und einem Ringbund (304b) des Steckerschaftes angeordnet ist.

5. Verbindungssystem nach Anspruch 3 oder 4, dadurch gekennzeichnet, daß eine Abdichtung nach außen mittels einer O-Ringdichtung (372, 373, 375a, 376) oberhalb des Halterings (313a, b, c, d, e) oder ein als Gummifeder (321b) ausgebildetes Federelement zwischen dem Gehäuseteil (368) und einem Ringbund (304b) des Steckerschaftes (304) angeordnet ist.

6. Verbindungssystem nach einem oder mehreren der Ansprüche 1 bis 5, dadurch gekennzeichnet, daß der Haltering (313, 313d) aus Kunststoff besteht und sich in der ringförmigen Kammer (359) abstützende elastische Nocken (316, 437) zur Zentrierung befinden.

7. Verbindungssystem nach Anspruch 6, dadurch gekennzeichnet, daß der Haltering (313d) einen geschlitzten Ringkörper (435) aufweist, von dem sich nach außen die elastischen Nocken (437) erstrecken, von denen der dem Schlitz (438) des Ringkörpers gegenüberliegende geschlitzt ist.

8. Verbindungssystem nach einem oder mehreren der Ansprüche 1 bis 5, dadurch gekennzeichnet, daß der Haltering (313a, c) aus Kunststoff oder Federband besteht und in der Nut (359) eine Dreipunktanlage besitzt und eine ovale Fläche umschließt.

9. Verbindungssystem nach Anspruch 8, dadurch gekennzeichnet, daß der Haltering (313a) aus zwei einendig verbundenen, gleichförmig bogenförmig gebogenen Armen (420) besteht, die an ihrer Außenseite etwa in der Armmitte abgeflacht sind und im Bereich der freien Armenden Durchbrechungen (421a) aufweisen, die sich zu den Armenden hin erweitern.

10. Verbindungssystem nach Anspruch 8, dadurch gekennzeichnet, daß der aus metallischem Federband bestehende Haltering (313c) zwei zur Längsachse zueinander klappsymmetrische, einendig verbundene Arme (428) besitzt, die eine ovale Fläche einschließen und in ihrem Mittelbereich einen kleineren Biegeradius besitzen als im übrigen Armbereich und an ihren freien Enden nach innen umgebogen sind.

11. Verbindungssystem nach Anspruch 10, dadurch gekennzeichnet, daß die Arme (428) ihrem Mittelbereich jeweils oben und unten rechtwinklig nach außen abgebogene Auflageflächen (430) besitzen.

12. Verbindungssystem nach einem oder mehreren der Ansprüche 1 bis 5, dadurch gekennzeichnet, daß der Haltering (313b) einen kreisförmigen geschlitzten Ringkörper besitzt, an dem nach innen abgebogene Federarme (426) ausgebildet sind.

13. Verbindungssystem nach Anspruch 12, dadurch gekennzeichnet, daß der Haltering (313b) kreisförmig gebogen ist und einen Schlitz (425) aufweist und einen Außendurchmesser besitzt, der dem Innendurchmesser der ihn aufnehmenden Ringnut entspricht und an den Schlitzenden nach innen, in zueinander entgegengesetzten Richtungen umgebogene bogenförmige Arme (426) aufweist, die eine ovale Fläche einschließen.

14. Verbindungssystem nach einem oder mehreren der Ansprüche 2 bis 5, dadurch gekennzeichnet, daß der Haltering (313e) einen Ringkörper (440) besitzt, der in der ringförmigen Kammer (359) angeordnet ist, die über einen Absatz von der Nut (359a) getrennt ist, und der Ringkörper radial nach außen spreizbar ist und an ihm die Federlappen (441) ausgebildet sind.

15. Verbindungssystem nach den Ansprüchen 12, 13 oder 14, dadurch gekennzeichnet, daß der Haltering (313b, e) aus Federband gefertigt ist.

16. Verbindungssystem nach einem oder mehreren der Ansprüche 1 bis 15, dadurch gekennzeichnet, daß zur Abdichtung nach außen am Ende des Adapters (366) und am Ende des Außengewindes (369) des Einschraubstücks (368) zwischen diesem und dem Adapter (366) ein Dichtring (374) angeordnet ist, der beim Einschrauben verpreßt wird.

17. Verbindungssystem nach einem oder mehreren der Ansprüche 1 bis 16, dadurch gekennzeichnet, daß der Verbindungsinnenraum durch eine O-Ringdichtung (309, 331, 372, 373) nach innen abgedichtet ist.

18. Verbindungssystem nach einem oder mehreren der Ansprüche 1 bis 17, dadurch gekennzeichnet, daß im oberen Bereich des Steckerschaftes (377) eine als umlaufende Ringnut (405) ausgebildete Einsteckmarkierung vorhanden ist.

**Claims**

1. Connection system for pressure lines, in particular synthetic-material lines for brake systems, consisting of a housing component (336, 368, 202) and a coupling component (354) that can be releasably connected with the latter by means of a plug system, in which the housing component has a through-borehole (353) into which one end of the coupling component, configured as a plug, can be sealingly inserted, and the shank (370, 377, 356, 304) of the plug is retained in the through-borehole of the housing component by means of a longitudinally slotted retainer ring (313, 313a, b, c, d, e) pre-assembled in a recess of one of the connection components, and the housing component consists of two sections joined by a screw connection, characterised in that the section of the housing component that receives the plug-shank (370, 377, 356, 304) consists of a threaded portion (368) with an external thread (369) which is screwed into the other section (366, 202) of the housing component that is provided with an internal thread (367) ; and that the recess consists of an annular cavity (359) —formed between the externally threaded portion and the other section — whose forward boundary wall in the direction of insertion consists of the end face of the externally threaded portion (368), in which situation, behind this end face, the retainer ring (313a, b, c, d, e) is arranged in such a manner that it can be expanded outwards by widening of its inner and outer contours and an axially operating spring element (309, 341, 321b, 401, 401a) is fitted between the plug (354) and the housing (366, 202).

2. Connection system in accordance with Claim 1, characterised in that the retainer ring (313e) has spring lobes (441) directed obliquely downwards and inwards towards the axis of insertion and these penetrate into a groove (359a) and lodge into an annular slot (371) of the plug shaft (377).

3. Connection system in accordance with Claim 1 of 2, characterised in that inside the through-borehole (353) a spring element configured as a plate spring (341) or rubber bush (309, 401, 401a) is fitted between a bearing surface (356a, 342) of the through-borehole and the inserted end of the plug shank (356, 370, 377).

4. Connection system in accordance with Claim 1 of 2, characterised in that outside the through-borehole (353), around the plug-shank (304), a rubber bush (321b) is fitted between the housing (368) and a collar (304b) of the plug-shank.

5. Connection system in accordance with Claim 3 or 4, characterised in that an external seal is provided by means of an O-ring seal (372, 373, 375a, 376) above the retainer ring (313a, b, c, d, e) or a spring element configured as a rubber bush (321b) is fitted between the housing component (368) and a collar (304b) of the plug-shank (304).

6. Connection system in accordance with one or several of Claims 1 to 5, characterised in that the retainer ring (313, 313d) is formed of synthetic material and supporting resilient cams (316, 437) are located in the annular. cavity (359) for the purpose of centering.

7. Connection system in accordance with Claim 6, characterised in that the retainer ring (313d) has a slotted ring body (435), from which the resilient cams (437) extend outwards, of which the cam located opposite to the slot (438) of the ring body is slotted.

8. Connection system in accordance with one or several of Claims 1 to 5, characterised in that the retainer ring (313a, c) consists of synthetic material or a flat spring and in the groove (359) it abuts at three points and encloses an oval surface.

9. Connection system in accordance with Claim 8, characterised in that the retainer ring (313a) consists of two arms (420) joined at one end and curved in the same shape in the form of a bow, which on their outer side, approximately in mid-arm, are flattened out and which exhibit, in the region of their free ends, perforations (421a) which extend to the ends of the arms.

10. Connection system in accordance with Claim 8, characterised in that the retainer ring (313c) consisting of metal spring strip having two arms (428) hinged to one another symmetrically in relation to the longitudinal axis and joined at one end, which enclose an oval surface and have in their middle area a smaller radius of bending than in the other parts of the arms, and which are bent round inwards at their free ends.

11. Connection system in accordance with Claim 10, characterised in that the arms (428), in their middle areas, have supporting surfaces (430), above and below in each case, bent away outwards at right angles.

12. Connection system in accordance with one or several of Claims 1 to 5, characterised in that the retainer ring (313b) has an annular slotted ring-body on which spring arms (426) bent inwards are formed.

13. Connection system in accordance with Claim 12, characterised in that the retainer ring (313b) is bent in a circular form and has a slot (425), and has an external diameter corresponding to the inner diameter of the annular slot that receives it, and has at the slot-ends arc-shaped arms (426), bent round inwards in opposite directions to each other, which enclose an oval surface.

14. Connection system according to one or several of Claims 2 to 5, characterised in that the retainer ring (313e) has a ring body (440) that fits in the annular cavity (359) which is separated from the groove (359a) by a step, and the ring body is expandable radially outwards and the spring lobes (441) are formed on it.

15. Connection system in accordance with Claims 12, 13 or 14, characterised in that the retainer ring (313b, e) is manufactured out of flat spring strip.

16. Connection system in accordance with one or several of Claims 1 to 15, characterised in that, for the purpose of external sealing, a sealing ring (374) is fitted at the end of the adapter (366) and at the end of the external thread (369) of the external screw part (368) between the latter and the adapter (366) and is compressed in the process of screwing-in.

17. Connection system in accordance with on or several of Claims 1 to 16, characterised in that the inner space of the connection is sealed . internally by an O-ring seal (309, 331, 372, 373).

18. Connection system in accordance with one or several of Claims 1 to 17, characterised in that there is provided in the upper region of the plug-shank (377) a plug-in marker configured as a surrounding annular slot (405).

## Revendications

1. Système de raccordement pour conduites sous pression, en particulier conduites en matière synthétique pour systèmes de freinage, constitué par un élément de boîtier (366, 368, 202) et un élément de couplage (354) pouvant être raccordé de façon séparable à celui-ci au moyen d'un système d'enfichage, l'élément de boîtier présentant un alésage de passage (353) dans lequel peut être enfiché de façon étanche à une extrémité l'élément de couplage constitué comme une fiche, la tige de fiche (370, 377, 356, 304) étant bloquée dans l'alésage de passage de l'élément de boîtier au moyen d'une bague d'arrêt (313, 313a, b, c, d, e) fendue longitudinalement et prémontée dans un évidement de l'élément de raccordement, et l'élément de boîtier étant constitué par deux pièces reliées par une liaison filetée, caractérisé en ce que la pièce de l'élément de boîtier recevant la tige de fiche (370, 377, 356, 304) est constituée par une pièce vissée munie d'un filetage mâle, qui se visse à l'intérieur de l'autre pièce (366, 202) de l'élément de boîtier, munie d'un filetage femelle (367), et que l'évidement est constitué par une chambre annulaire (359) formée entre la pièce vissée et l'autre pièce, dont la paroi de limitation antérieure dans le sens du vissage est constituée par la face frontale de la pièce vissée (368), la bague d'arrêt (313a, b, c, d, e) pouvant s'écarter derrière cette face frontale par élargissement de son contour intérieur et extérieur et un élément de ressort agissant axialement (309, 341, 321b, 401, 401a) étant disposé entre la fiche (354) et le boîtier (366, 202).

2. Système de raccordement selon la revendication 1, caractérisé en ce que la bague d'arrêt (313e) présente des pattes élastiques inclinées vers le bas et vers l'intérieur, dirigées vers l'axe d'enfichage, qui traversent une rainure (359a) et s'encliquètent dans une rainure annulaire (371) du goujon de fiche (377).

3. Système de raccordement selon la revendication 1 ou 2, caractérisé en ce qu'à l'intérieur de l'alésage de passage (353) est disposé un élément de ressort sous forme d'une rondelle-ressort (341) ou d'un ressort en caoutchouc (309, 401, 401a), entre une face d'appui (356a, 342) de l'alésage de passage et l'extrémité d'enfichage de la tige de fiche (356, 370, 377).

4. Système de raccordement selon la revendication 1 ou 2, caractérisé en ce qu'à l'extérieur de l'alésage de passage (353) est disposé autour de la tige de fiche (304) un ressort en caoutchouc (321b) entre le boîtier (368) et une collerette annulaire (304b) de la tige de fiche.

5. Système de raccordement selon la revendication 3 ou 4, caractérisé en ce qu'une obturation étanche vers l'extérieur au moyen d'un joint torique d'étanchéité (372, 373, 375a, 376) au-dessus de la bague d'arrêt (313a, b, c, d, e), ou un élément de ressort sous forme de ressort en caoutchouc (321b), est disposé entre l'élément de boîtier (368) et une collerette annulaire (304b) de la tige de fiche (304).

6. Système de raccordement selon une ou plusieurs des revendications 1 à 5, caractérisé en ce que la bague d'arrêt (313, 313d) est en matière synthétique et que des saillies élastiques d'appui (316, 437) se trouvent dans la chambre annulaire (359) pour le centrage.

7. Système de raccordement selon la revendication 6, caractérisé en ce que la bague d'arrêt (313d) présente un corps annulaire fendu (435) d'où s'étendent vers l'extérieur les saillies élastiques (437) dont celle située en regard de la fente (438) du corps annulaire est fendue.

8. Système de raccordement selon une ou plusieurs des revendications 1 à 5, caractérisé en ce que la bague d'arrêt (313a, c) est en matière synthétique ou en feuillard à ressorts et possède une portée en trois points dans la gorge (359) et entoure une surface ovale.

9. Système de raccordement selon la revendication 8, caractérisé en ce que la bague d'arrêt (313a) est constituée par deux bras (420) semblables incurvés en forme d'arc et reliés par une extrémité, qui sont aplatis sur leur face extérieure à peu près au milieu des bras et présentent dans la zone des extrémités libres des bras des découpes (421a) qui s'élargissent vers les extrémités des bras.

10. Système de raccordement selon la revendication 8, caractérisé en ce que la bague d'arrêt (313c) en feuillard à ressorts métallique possède deux bras (428) présentant mutuellement une symétrie-miroir autour de l'axe longitudinal, reliés à une extrémité, qui entourent une surface ovale et possèdent dans leur région médiane un rayon de courbure plus petit que dans les autres régions des bras et sont recourbés vers l'intérieur à leurs extrémités libres.

11. Système de raccordement selon la revendication 10, caractérisé en ce que les bras (428) possèdent chacun en haut et en bas des faces d'appui (430) repliées à angle droit vers l'extérieur.

12. Système de raccordement selon une ou plusieurs des revendications 1 à 5, caractérisé en ce que la bague d'arrêt (313b) possède un corps de bague circulaire fendu, sur lequel sont formés des bras-ressorts (426) repliés vers l'intérieur.

13. Système de raccordement selon la revendication 12, caractérisé en ce que la bague d'arrêt (313b) est incurvée en forme de cercle et présente une fente (425) et possède un diamètre extérieur qui correspond au diamètre intérieur de la rainure annulaire qui la reçoit, et présente aux extrémités de la fente des bras (426) en forme d'arcs, recourbés dans des directions mutuellement opposées, qui entourent une surface ovale.

14. Système de raccordement selon une ou plusieurs des revendications 2 à 5, caractérisé en ce que la bague d'arrêt (313e) possède un corps de bague (440), qui est disposé dans la chambre annulaire (359) séparée de la rainure (359a) par un épaulement, que le corps de bague peut s'écarter radialement vers l'extérieur et que les pattes élastiques (441) y sont formées.

15. Système de raccordement selon l'une des revendications 12, 13 et 14, caractérisé en ce que la bague d'arrêt (313b, e) est réalisée en feuillard à ressorts.

16. Système de raccordement selon une ou plusieurs des revendications 1 à 15, caractérisé en ce que, pour l'étanchéité vis-à-vis de l'extérieur, à l'extrémité du raccord (366) et à l'extrémité du filetage mâle (369) de la pièce vissée (368) est disposée entre celle-ci et le raccord (366) une bague d'étanchéité (374), qui est comprimée lors du vissage.

17. Système de raccordement selon une ou plusieurs des revendications 1 à 16, caractérisé en ce que l'espace intérieur de raccordement est rendu étanche vers l'intérieur par un joint torique (309, 331, 372, 373).

18. Système de raccordement selon une ou plusieurs des revendications 1 à 17, caractérisé en ce qu'un repère d'enfichage est présent dans la région supérieur de la tige de fiche (377) sous la forme d'une rainure annulaire circonférentielle (405).

FIG.2  FIG.1

FIG.3

FIG.4    FIG.5

FIG.6

X      X

421a     421     421a

313a

422         422

420        420

X

**FIG.7**

313b       425

426       426

**FIG.8**

X    429    X     313c

428      428

430

430

X

**FIG.9**

FIG.10

FIG.11

FIG.12

353

FIG. 13

FIG. 14